(19) Europäisches Patentamt
European Patent Office
Office européen des brevets

(11) Publication number: **0 390 108 B1**

# (12) EUROPEAN PATENT SPECIFICATION

(45) Date of publication of patent specification: **14.09.94**

(51) Int. Cl.5: **C08L 23/20**, C08J 5/18, C08L 81/04

(21) Application number: **90105913.9**

(22) Date of filing: **28.03.90**

## (54) Film of mixture of 4-methyl-1-pentene polymer and phenylene sulfide polymer.

(30) Priority: **28.03.89 JP 75601/89**

(43) Date of publication of application:
**03.10.90 Bulletin 90/40**

(45) Publication of the grant of the patent:
**14.09.94 Bulletin 94/37**

(84) Designated Contracting States:
**DE FR GB**

(56) References cited:
**EP-A- 0 244 093**
**EP-A- 0 305 539**
**EP-A- 0 360 439**

(73) Proprietor: **MITSUI PETROCHEMICAL INDUSTRIES, LTD.**
**2-5, Kasumigaseki 3-chome**
**Chiyoda-ku**
**Tokyo 100 (JP)**

(72) Inventor: **Kato, Tatsuo, c/o Mitsui Petrochemical Ind., Ltd.**
**1-2, Waki 6-chome,**
**Waki-cho**
**Kuga-gun, Yamaguchi-ken (JP)**

(74) Representative: **Hansen, Bernd, Dr.rer.nat. et al**
**Hoffmann, Eitle & Partner**
**Patentanwälte**
**Postfach 81 04 20**
**D-81904 München (DE)**

EP 0 390 108 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a film of a mixture of a 4-methyl-1-pentene polymer and a phenylene sulfide polymer. More specifically, it relates to a film having excellent rigidity at relatively high temperatures while retaining the various excellent properties of the 4-methyl-1-pentene polymer.

Poly(4-methyl-1-pentene), PMP for short, has a melting point of 230 to 240 °C, and possesses excellent thermal resistance, mechanical properties, chemical resistance, electrical insulating property and mold releasability. Accordingly, PMP is widely used, for example, as a mold-releasing film for manufacturing printed circuit boards, a releasing film for thermosetting resins, and a cable covering film.

The poly(4-methyl-1-pentene) does not necessarily have sufficient rigidity at relatively high temperatures of 100 °C or above. Hence, its film applications are limited.

Polyphenylene sulfide (PPS) has excellent thermal resistance, strength, rigidity, chemical resistance, electrical insulation property and affinity for an inorganic material. Accordingly, a polyphenylene sulfide composition having a fiber reinforcing agent and/or an inorganic filler incorporated therein has been widely used for injection molding.

Japanese Laid-Open Patent Publication No. 213562/1988 and EP-A-0 305 539 disclose a fiber-reinforced thermally stable polyolefin composition having excellent thermal resistance and mechanical strength comprising (A) 5 to 85 % by weight of poly(phenylene sulfide), (B) 15 to 95 % by weight of a modified polyolefin having a melting point of at least 200 °C graft-modified partly or wholly with 0.01 to 10 % by weight of an unsaturated carboxylic acid or its derivative, and (C) 10 to 60 parts by weight, per 100 parts by weight of the polymers (A) and (B) combined, of reinforcing fibers. This patent document discloses a modified product of poly(4-methyl-1-pentene) and a modified product of poly(3-methyl-1-butene) as the modified polyolefin, and states that compositions comprising them are injection-molded.

Since one characteristic feature of the above compositions is to include a large amount of reinforcing fibers, the patent document does not at all suggest films of these compositions.

EP-A-0 244 093 discloses biaxially stretched PPS films comprising PMP in minor amounts. Heat resistance and processability are said to be deteriorated above 15 parts by weight of PMP per 100 parts by weight of PPS.

EP-A-0 360 439 representing prior art according to Article 54(3) EPC relates to heat-resistant molding compositions, but is not addressed to the formation of films.

It is an object of this invention to provide a film having excellent rigidity at high temperatures while retaining the excellent properties of the 4-methyl-1-pentene polymer, such as thermal resistance, chemical resistance, electrical insulation property and releasability.

Another object of this invention is to provide a film having the above properties from a mixture having excellent film processability of a 4-methyl-1-pentene polymer and a phenyl sulfide polymer in a specific ratio.

Other objects of this invention along with its advantages will become apparent from the following description.

The above objects and advantages are achieved in accordance with this invention by a film formed from a polymer mixture comprising (A) a 4-methyl-1-pentene homopolymer or copolymer, (B) a phenylene sulfide polymer, the proportion of the polymer (A) being 80 to 97 % by weight and the proportion of polymer (B) being 20 to 3 % by weight, both based on the total weight of the polymers (A) and (B) combined, wherein said 4-methyl-1-pentene copolymer contains at least 85 mol% of units of 4-methyl-1-pentene and not more than 15 mol% of units derived from other alpha-olefins having 2 to 20 carbon atoms.

Figure 1 accompanying this application is a schematic view showing part of an apparatus for producing a stretched film of this invention. The 4-methyl-1-pentene polymer (A) used in this invention includes a homopolymer of 4-methyl-1-pentene and copolymers of 4-methyl-1-pentene and other alpha-olefins. Thereby, the copolymers contain at least 85 mole % of units of 4-methyl-1-pentene and not more than 15 mole % of units derived from the other alpha-olefin. The copolymers preferably contain at least 91 mole % of units of 4-methyl-1-pentene, and not more than 9 mole % of units of the other alpha-olefin units.

The other alpha-olefins are alpha-olefins having 2 to 20 carbon atoms such as ethylene, propylene, 1-butene, 1-hexene, 1-octene, 1-decene, 1-tetradecene and 1-octadecene.

The 4-methyl-1-pentene has a melt flow rate (ASTM D-1238 measured under a load of 5 kg at a temperature of 260 °C) of preferably 0.05 to 500 g/10 minutes, more preferably 5 to 500 g/10 min., especially preferably 25 to 150 g/10 min. If its melt flow rate is within the above range, the polymer mixture used in this invention has good film processability.

A graft-modified polymer obtained by modifying a homopolymer or copolymer of 4-methyl-1-pentene with an unsaturated carboxylic acid or its derivative may also be used.

Examples of the unsaturated carboxylic acid or its derivative as a grafting monomer include unsaturated carboxylic acids such as acrylic acid, maleic acid, fumaric acid, tetrahydrophthalic acid, itaconic acid, citraconic acid, crotonic acid, isocrotonic acid, and endocis-bicyclo[2,2,1]hept-5-ene-2,3-dicarboxylic acid; and acid halides, amides, imides, anhydrides and esters of the unsaturated carboxylic acids such as maleimide, maleic anhydride, malenyl chloride, citraconic anhydride, monomethyl maleimide, dimethyl maleate, glycidyl maleate and dimethyl maleate. Of these, the unsaturated dicarboxylic acids or their acid anhydrides are preferred. Especially preferred are maleic acid and endocis-bicyclo[2,2,1]hept-5-ene-2,3-dicarboxylic acids, particularly these anhydrides are preferred.

The grafting monomer selected from these unsaturated carboxylic acids and their derivatives may be graft-copolymerized with poly(4-methyl-1-pentene) by various known methods. For example, the polymer is melted, and the grafting monomer is added and copolymerized. Alternatively, the polymer may be dissolved in a solvent, and the grafting monomer may be added and graft-copolymerized. In any case, in order to graft-copolymerize the grafting monomer efficiently, the reaction is preferably carried out in the presence of a radical initiator. Usually, the grafting reaction may be carried out at a temperature of 60 to 350 °C. The proportion of the radical initiator used is usually 0.001 to 1 part by weight per 100 parts by weight of the 4-methyl-1-pentene polymer. The radical initiator may be, for example, an organic peroxide, an organic peroxy ester or an azo compound. A preferred radial initiator is a dialkyl peroxide such as dicumyl peroxide, di-tert-butyl peroxide, 2,5-dimethyl-2,5-di(tert-butylperoxy)hexyne-3, 2,5-dimethyl-2,5-(tert-butylperoxy)hexane or 1,4-bis-(tert-butylperoxyisopropyl) benzene.

The graft polymer contains preferably not more than 10 % by weight of a graft component derived from the grafting monomer.

Examples of the phenylene sulfide polymer (B) are a homopolymer of phenylene sulfide and a copolymer of phenylene sulfide with another copolymerizable component.

The phenylene sulfide polymer unit is represented by the following formula

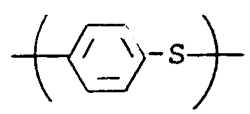 .

The copolymerizable sulfide component may include

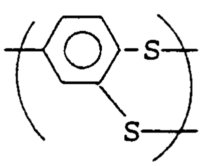 , 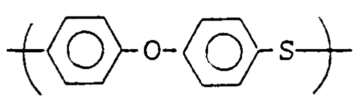 , 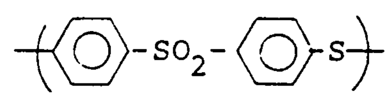 ,

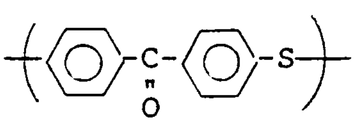 , 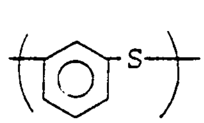 , and 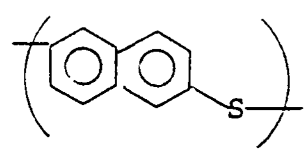 .

The phenylene sulfide polymer has a melt viscosity of preferably 5 to 5,000 Pa.s (50 to 50,000 poises), particularly 10 to 500 Pa.s (100 to 5,000 poises), at a temperature of 300 °C and a shear rate of 200 $s^{-1}$.

The polymer mixture as used in this invention preferably consists essentially of the 4-methyl-1-pentene polymer (A) and the phenylene sulfide polymer (B).

The polymer mixture as used in the invention contains 80 to 97 % by weight of the 4-methyl-1-pentene polymer and 20 to 3 % by weight of the phenylene sulfide polymer based on the total weight of the polymers (A) and (B).

This polymer mixture has good film process-ability and gives a film having excellent rigidity at high temperatures.

Preferably, the polymer mixture contains 85 to 95 % by weight of 4-methyl-1-pentene polymer and 15 to 5 % by weight of the phenylene sulfide polymer on the same basis as above.

The polymer mixture as used in the invention may contain various additives which are normally used in poly-olefins, such as weather stabilizers, anti-corrosive agents, slip agents, nucleating agents, pigments, and

dyes in amount which do not impair the objects of the invention.

The polymer mixture in accordance with this invention may be prepared by various known methods from the 4-methyl-1-pentene polymer (A) and the phenylene sulfide polymer (B) in the proportions indicated hereinabove and if required, known additives. For example, these materials are mixed by a V-blender, a ribbon blender, a Henschel mixer, or a tubular blender; or they are mixed by the above blenders or mixer; and then the mixture is granulated by an extruder. Alternatively, they may be melt-kneaded by a single-screw extruder, a multi-screw extruder, a kneader or a Banbury mixer and then be granulated or crushed.

The film of this invention may be produced by a known processing method from the polymer mixture prepared as above, for example by extrusion. The film of this invention may include both an unstretched film and a stretched film. The stretched film may be obtained, in accordance with a known method, by stretching the unstretched film obtained by, for example, extrusion.

For example, in Figure 1, an unstretched film melt-extruded from a T-die of an extruder 1 is cooled to about 60 °C by a chill roll 2. Then, it is heated by first hot rolls 3,3′ kept at 150 °C, and monoaxially stretched at a stretch ratio of 2.5 to 7, preferably at a stretch ratio of 4 to 6. The film monoaxially stretched at such a stretch ratio has higher thermal-resistant rigidity than that of the unstretched film.

The film of this invention is provided usually as a film having a thickness of 5 to 200 micrometers, preferably as an unstretched film having a thickness of 20 to 70 micrometers and as a stretched film having a thickness of 10 to 50 micrometers.

Since the film of this invention has excellent rigidity at high temperatures, it can be suitably used in applications exposed to high temperatures, for example, as a releasing film for high temperatures, or as a wrapping tape for heat-curing of thermosetting resins or rubbers.

The following examples illustrate the invention more specifically.

In these examples, the tensile Young's modulus of the film was measured in accordance with ASTM D-882, and its haze, in accordance with ASTM D-1746.

EXAMPLE 1

97 parts by weight of a crystalline copolymer of 4-methyl-1-pentene and octadecene [octadecene content: 6.5 % by weight (about 2.23 mole %); MFR (ASTM D 1238, load 5 kg, 260 °C); 20 g/10 min.; to be referred to as PMP] and 3 parts by weight of a polyphenylene sulfide resin [T-1, Tohpren Co., Ltd., melt viscosity at 300 °C of 10 to 30 Pa.s (100 to 300 poises); composed of recurring units

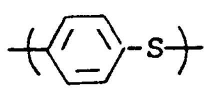 ]

were melt-mixed at a cylinder temperature of 290 °C and melt-mixed to 270 °C by a multi-screw extruder having a diameter of 45 mm, and pelletized.

The pellets were then formed into a film at a cylinder temperature of 290 °C by a molding machine having a T-die with a cylinder diameter of 40 mm to give a film having a thickness of 50 micrometers.

The properties of the resulting film are shown in Table 1.

EXAMPLES 2 and 3

A film having a thickness of 50 micrometers was obtained in the same way as in Example 1 except that the amount of the polyphenylene sulfide resin T-1 was changed to 5 and 7 parts by weight, and the amount of PMP was changed to 95 and 93 parts by weight.

The properties of the films obtained are shown in Table 1.

EXAMPLE 4

Example 1 was repeated except that in place of the polyphenylene sulfide resin T-1, 3 parts by weight of polyphenylene resin [T-4, Tohpren Co., Ltd., melt viscosity at 300 °C; 200 to 400 Pa.s (2,000 to 4,000 poises); composed of recurring units of formula

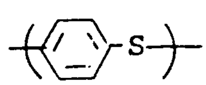 ].

A film having a thickness of 50 micrometers was obtained.

The properties of the film are shown in Table 1.

EXAMPLES 5 and 6

Example 4 was repeated except that the amount of the polyphenylene sulfide resin T-4 was changed to 5 and 7 parts by weight, and the proportion of PMP was changed to 95 and 93 parts by weight. Thus, films having a thickness of 50 micrometers were obtained.

The properties of the films are shown in Table 1.

COMPARATIVE EXAMPLE 1

Example 1 was repeated except that the poly-phenylene sulfide was not used, and only PMP was used. A film having a thickness of 50 micrometers was obtained.

The properties of the film are shown in Table 1.

EXAMPLE 7

The same polymer mixture as used in Example 6 was formed into a sheet having a thickness of 0.2 mm by a single-screw extruder having a T-die. The temperature of the extruder was kept at 300 °C, and the die was kept at 290 °C. The extruded sheet was cooled and solidified with a chill roll at 80 °C, and then pre-heated by a pre-heating roll at 170 °C. The pre-heated sheet was stretched to 5 times by stretching rolls at a take-up speed of 20 m/min.

The properties of the film are shown in Table 1.

Table 1

| Item | Unit | Example 1 | Example 2 | Example 3 | Example 4 |
|---|---|---|---|---|---|
| Polymethylpentene | wt.% | 97 | 95 | 93 | 97 |
| Polyphenylene sulfide T-1 | wt.% | 3 | 5 | 7 | - |
| Polyphenylene sulfide T-4 | wt.% | - | - | - | 3 |
| Haze | % | 72 | 85 | 86 | 75 |
| Tensile properties<br>23 °C, MD/TD (*)<br>Tensile Young's modulus | GPa<br>($x10^4$ $kg/cm^2$) | 1.0/1.0 | 1.1/1.0 | 1.0/1.1 | 1.2/1.2 |
| 120 °C, MD/TD<br>Tensile Young's modulus | MPa<br>($kg/cm^2$) | 74.6/90<br>(746/900) | 74.3/88.3<br>(743/883) | 79.8/93.4<br>(798/934) | 70.1/87.9<br>(701/879) |
| 150 °C, MD/TD<br>Tensile Young's modulus | MPa<br>($kg/cm^2$) | 36.0/47.6<br>(360/476) | 40.7/54.6<br>(407/546) | 45.0/55.8<br>(450/558) | 41.7/42.6<br>(417/426) |

(*) MD = machine direction
TD = transverse direction

- to be continued -

Table 1 (continued)

| Item | Unit | Example 5 | Example 6 | Comparative Example 1 | Example 7 |
|---|---|---|---|---|---|
| Polymethylpentene | wt.% | 95 | 93 | 100 | 93 |
| Polyphenylene sulfide T-1 | wt.% | - | - | - | - |
| Polyphenylene sulfide T-4 | wt.% | 5 | 7 | - | 7 |
| Haze | % | 83 | 87 | 0.8 | 84 |
| Tensile properties 23 °C, MD/TD (*) Tensile Young's modulus | GPa ($\times 10^4$ $kg/cm^2$) | 1.2/1.1 | 1.1/1.1 | 1.1/1.1 | 1.6/1.2 |
| 120 °C, MD/TD Tensile Young's modulus | MPa ($kg/cm^2$) | 71.3/89.3 (713/893) | 72.9/92.2 (729/922) | 40.0/37.4 (400/374) | 207/129 (2070/1290) |
| 150 °C, MD/TD Tensile Young's modulus | MPa ($kg/cm^2$) | 44.1/49.4 (441/494) | 44.6/53.5 (446/535) | 18.9/24.4 (189/244) | 125/64 (1250/640) |

## Claims

1. A film being formed from a polymer mixture comprising (A) a 4-methyl-1-pentene homopolymer or copolymer, and (B) a phenylene sulfide polymer, the proportion of the polymer (A) being 80 to 97 % by

weight and the proportion of polymer (B) being 20 to 3 % by weight, both based on the total weight of the polymers (A) and (B) combined, wherein said 4-methyl-1-pentene copolymer contains at least 85 mol% of units of 4-methyl-1-pentene and not more than 15 mol% of units derived from other alpha-olefins having 2 to 20 carbon atoms.

**2.** The film of claim 1, wherein the 4-methyl-1-pentene polymer (A) has a melt flow rate MFR 260/5 of 0.05 to 500 g/10 minutes.

**3.** The film of claim 1, wherein the 4-methyl-1-pentene polymer (A) is a graft-modified polymer obtained by graft-modifying a homopolymer of 4-methyl-1-pentene or a copolymer of 4-methyl-1-pentene and another alpha-olefin with an unsaturated carboxylic acid or its derivative.

**4.** The film of claim 1, wherein the phenylene sulfide polymer (B) is a homopolymer composed of polymer units represented by the following formula

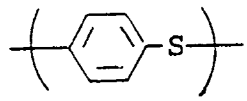

or a copolymer composed of said units and units of another sulfide component.

**5.** The film of claim 1, wherein the phenylene sulfide polymer (B) has a melt viscosity of 5 to 5,000 Pa.s (50 to 50,000 poises) at a shear rate of 200 $s^{-1}$ at 300 °C.

**6.** The film of claim 1, wherein the polymer mixture consists essentially of the 4-methyl-1-pentene polymer (A) and the phenylene sulfide polymer (B).

**7.** The film of claim 1, which is unstretched or monoaxially stretched.

**Patentansprüche**

**1.** Film, hergestellt aus einer Polymermischung, umfassend (A) ein 4-Methyl-1-pentenhomopolymer oder -copolymer, und (B) ein Phenylensulfidpolymer, wobei der Anteil des Polymers (A) 80 bis 97 Gew.-% und der Anteil des Polymers (B) 20 bis 3 Gew.-% beträgt, jeweils bezogen auf das Gesamtgewicht der Polymeren (A) und (B) zusammen, worin das 4-Methyl-1-pentencopolymer wenigstens 85 Mol-% an Einheiten von 4-Methyl-1-penten und nicht mehr als 15 Mol-% von Einheiten, die sich von einem anderen alpha-Olefin mit 2 bis 20 Kohlenstoffatomen ableiten, enthält.

**2.** Film gemäß Anspruch 1, in welchem das 4-Methyl-1-pentenpolymer (A) eine Schmelzfließrate MFR 260/5 von 0,05 bis 500 g/10 min hat.

**3.** Film gemäß Anspruch 1, in welchem das 4-Methyl-1-pentenpolymer (A) ein pfropfmodifiziertes Polymer ist, erhalten durch Pfropfmodifizieren eines Homopolymers aus 4-Methyl-1-penten oder einem Copolymer aus 4-Methyl-1-penten und einem anderen alpha-Olefin mit einer ungesättigten Carboxylsäure oder einem Derivat davon.

**4.** Film gemäß Anspruch 1, bei dem das Phenylensulfidpolymer (B) ein Homopolymer ist, das sich aus Polymereinheiten der nachfolgenden Formel zusammensetzt

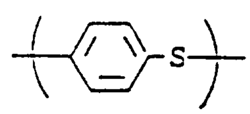

oder ein Copolymer, das sich aus den genannten Einheiten und Einheiten einer anderen Sulfidkomponente zusammensetzt.

**5.** Film gemäß Anspruch 1, bei dem das Phenylensulfidpolymer (B) eine Schmelzviskosität von 5 bis 5.000 Pa.s (50 bis 50.000 Poises) bei einer Scherrate von 200 $s^{-1}$ bei 300 ° C hat.

**6.** Film gemäß Anspruch 1, bei dem die Polymermischung im wesentlichen aus 4-Methyl-1-pentenpolymer (A) und dem Phenylensulfidpolymer (B) besteht.

**7.** Film gemäß Anspruch 1, in ungerecktem oder monoaxial gerecktem Zustand.

**Revendications**

**1.** Film étant formé à partir d'un mélange de polymères comprenant (A) un homopolymère ou copolymère de 4-méthyl-1-pentène et (B) un polymère de sulfure de phénylène, la proportion du polymère (A) étant 80 à 97 % en poids et la proportion du polymère (B) étant 20 à 3 % en poids, toutes les deux basées sur le poids total des polymères (A) et (B) combinés, dans lequel ledit copolymère de 4-méthyl-1-pentène contient au moins 85 % en mole de motifs de 4-méthyl-1-pentène et pas plus que 15% en mole de motifs provenant d'autres alpha-oléfines ayant 2 à 20 atomes de carbone.

**2.** Film selon la revendication 1, dans lequel le polymère de 4-méthyl-1-pentène (A) possède un débit d'écoulement en fusion MFR 260/5 compris entre 0,05 et 500 g/10 minutes.

**3.** Film selon la revendication 1, dans lequel le polymère de 4-méthyl-1-pentène (A) est un polymère modifié par greffe obtenu en modifiant par greffe un homopolymère de 4-méthyl-1-pentène ou un copolymère de 4-méthyl-1-pentène et d'une autre alpha-oléfine avec un acide carboxylique insaturé ou son dérivé.

**4.** Film selon la revendication 1, dans lequel le polymère de sulfure de phénylène (B) est un homopolymère composé de motifs de polymère représentés par la formule suivante

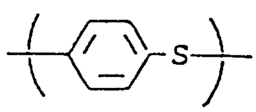

ou un copolymère constitué desdits motifs et des motifs d'un autre composant de sulfure.

**5.** Film selon la revendication 1, dans lequel le polymère de sulfure de phénylène (B) possède une viscosité de fusion de 5 à 5 000 Pa.s. (50 à 50 000 poises) à une vitesse de cisaillement de 200 $s^{-1}$ à 300 ° C.

**6.** Film selon la revendication 1, dans lequel le mélange de polymères est constitué essentiellement du polymère de 4-méthyl-1-pentène (A) et du polymère de sulfure de phénylène (B).

**7.** Film selon la revendication 1, qui est non étiré ou étiré de manière axiale.

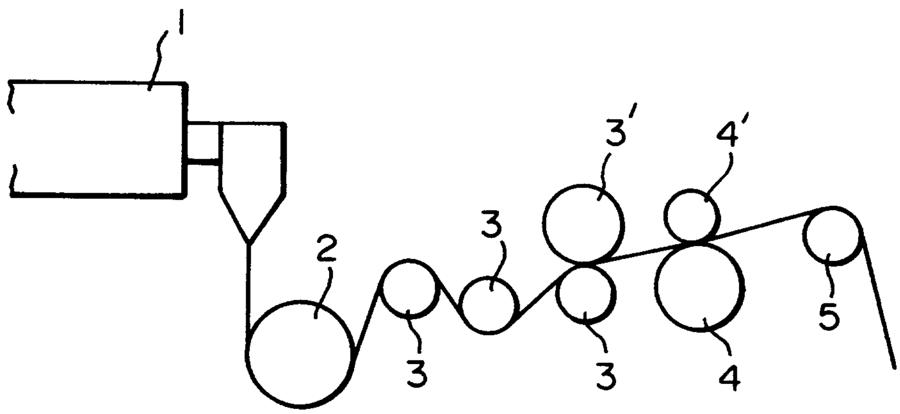


FIG. 1